# EUROPEAN PATENT APPLICATION

(11) **EP 1 069 163 A1**
(43) Date of publication of application: **17.01.2001**
(21) Application number: 00114858.4
(22) Date of filing: 11.07.2000
(51) Int. Cl.: C09D 4/06, C08F 290/06, E01F 9/04

(54) **Photocurable coating composition for road markings**

(30) Priority: 13.07.1999 JP 19922299
(71) Applicant: SHOWA DENKO KABUSHIKI KAISHA, Minato-ku, Tokyo (JP)
(72) Inventor: Kamata, Hirotoshi c/o Showa Denko K.K.,, Kawasaki-shi, Kanagawa-keu (JP); Matsuda, Tokio, Tokyo (JP); Takahashi, Katsuyuki, Saitama-ken (JP)
(74) Representative: Strehl Schübel-Hopf & Partner

(57) **Abstract**

The object of the present invention is to provide a coating composition for road markings having improved coatability and workability due to a reduced viscosity and a quick drying property; in order to achieve the object, the present invention provides a photocurable coating composition for road markings comprising (A) 100 parts by weight of a compound having an ethylenically unsaturated group, of which the boiling temperature is 120°C or greater at normal pressure; (B) 0.1 to 15 parts by weight of a photopolymerization initiator, (C) 3 to 50 parts by weight of a color pigment; and (D) 30 to 200 parts by weights of an extender pigment.

## Description

### BACKGROUND OF THE INVENTION

### Field of the Invention

The present invention relates to a coating composition for road markings which can be photocured by the light energy within a short time, has improved coatability and workability due to a reduced viscosity, and excellent abrasion resistance.

This application is based on Patent Application No. Hei 11-199222 filed in Japan and Provisional Application filed on June 29, 2000 in United States of America, the contents of which are incorporated herein by reference.

### Description of the Related Art

Conventional coating materials for road markings are classified into JIS K 5665 Class 1 (ordinary temperature), Class 2 (heating) and Class 3 (melting). The coating material for road markings is used for marking boundary lines or road signs (hereinafter simply referred to as "road markings") and mainly required to have good drying property, adhesive strength to the road surface, abrasion resistance, staining resistance and the like.

The coating materials of Class 1 and Class 2 are predominantly used for marking outer lines and lane boundaries. These coating materials use a ketone-type, ester-type, aliphatic or aromatic solvent having a high evaporation rate and since the coated film is formed by volatilizing the solvent, there are serious problems in view of safety and air pollution. In order to solve these problems, coating materials for road markings using an aqueous coating material have been proposed (see, JP-A-61-243866 (the term "JP-A" as used herein means an "unexamined published Japanese patent application"), JP-A-3-157463 and JP-A-6-271789), however, water used as a solvent in these coating materials is low in the drying rate and accordingly, these coating materials for road markings are difficult to have quick drying property required.

The coating material of Class 3 is predominantly used for marking zebra zones and center lines. This is a melting-type coating material which is used after melting at from 180 to 220°C, and therefore, this coating material has super-quick drying property and is free of the problem of air pollution. However, in the case of the melting-type coating material, due to its properties, it is extremely difficult to adopt simple coating methods such as spraying. Moreover, a petroleum resin is generally used as a binder component and since the petroleum resin itself is poor in the abrasion resistance, this coating material is disadvantageously high in the rate of abrasion due to abrading by tires of running cars. In order to maintain the function as a road marking for a necessary time period, the coated film must be formed to have a fairly large thickness of 1 mm or more. For forming a film to have a large thickness, a huge amount of coating material is consumed, the transportation cost of the coating material increases, and the coating work and the like require great labors. Furthermore, a heat source for heat-melting the coating material must be carried into the field and working in a high-temperature environment is unavoidable. Thus, improvements have been demanded from the standpoint of safety and health of workers.

In recent years, photoradical polymerization material and photocationic polymerization material are drawing attention in view of the quick drying property, ordinary temperature curability, availability of a solvent-free system and energy savings, and these are practically used in various fields such as printed board fabrication, resist or photomask, wood painting, optical fiber coating, hard coating on plastics and can coating. Applications of photocured material to a coating composition for road markings are disclosed in JP-A-8-209058 and JP-A-10-183020. However, since JP-A-8-209058 uses a large amount of monofunctional (meth)acrylate having a low boiling point such as methyl methacrylate; therefore, malodors and air pollution are very likely caused. Moreover, when a large amount of monofunctional (meth)acrylate is contained, the photocuring rate is very low, and useful drying properties for road markings is difficult to obtained. Therefore, advantages that the coating material is cured in seconds which is a characteristic of photocuring cannot be obtained.

Moreover, a photocurable coating composition for road markings used in a spray gun is suggested in JP-A-10-183020. However, the coating composition has disadvantage of inferior photocurability, similar to the composition disclosed in JP-A-8-209058.

### SUMMARY OF THE INVENTION

An object of the present invention to provide a coating composition for road markings having improved workability due to a reduced viscosity and a quick drying property.

The photocurable coating composition for road markings of the present invention is photocured with a practicable curing rate. In addition, when the coating composition does not contain solventless monomer having a low boiling temperature, generation of odor and the load of air pollution can be remarkably reduced. Furthermore, unlike a melting-type coating, the coating composition of the present invention is not necessary to be melted at a high temperature in the field and thereby working in the safe and comfortable environment is ensured. Moreover, the coating composition of the present invention is advantageous in that due to its abrasion resistance superior to that of melting-type coatings, the film thickness can be greatly reduced.

The present invention provide the photocurable coating composition for road markings comprising:
(A) 100 parts by weights of a compound having an ethylenically unsaturated group, which has a boiling temperature at normal pressure of 120°C or greater;
(B) 0.1 to 15 parts by weights of a photopolymerization initiator;
(C) 3 to 50 parts by weights of a color pigment;
(D) 30 to 200 parts by weights of an extender pigment.

### DETAILED DESCRIPTION OF THE PREFERRED EMBODIMENTS

(Meth)acrylic acid means acrylic acid and methacrylic acid in the present specification. (Meth)acylate means acylate and methacrylate in the present specification. Furthermore, (meth)acryloyl means acryloyl and methacryloyl.

The photocurable coating composition for road markings of the present invention comprises (A) 100 parts by weights of a compound haying an ethylenically unsaturated group, which has a boiling temperature at normal pressure of 120°C or greater; (B) 0.1 to 15 parts by weights of a photopolymerization initiator; (C) 3 to 50 parts by weights of a color pigment; (D) 30 to 200 parts by weights of an extender pigment. In order to obtain the coating composition having improved coatability and workability, that is, the coating composition used for spray coating, the viscosity of the coating composition must be lowered. The viscosity of the coating composition of the present invention at 25°C is preferably in a range of from 50 to 4000 mP·s, more preferably in a range of from 100 to 3000 mP·s, and most preferably in a range of from 200 to 2000 mP·s. When the viscosity of the coating composition at 25°C is more than 4000 mP·s, spray coat of the coating composition is difficult to be performed at normal temperature. In contrast, when the viscosity of the coating composition at 25°C is less than 50 mP·s, dispersibility and stability of the extender pigment, etc. sometimes worsen.

Moreover, the viscosity of the compound having an ethylenically unsaturated group at 25°C is preferably in a range of from 30 to 500 mP·s. and more preferably in a range of from 50 to 300 mP·s.

For example, the rotation type viscometers capable of measuring the viscosity of resin compositions at liquid state, such as B type viscometer and E type viscometer (marketed by Toki Industry Co. Ltd., for example) can be used. However, the viscometer used in the present invention cannot be limited to these rotation type viscometers.

The compound having an ethylenically unsaturated group for use in the present invention is preferably a compound having a boiling temperature at normal pressure of 120°C or greater, in order to prevent the generation of odor of the compound having an ethylenically unsaturated group while the composition is coated and cured. Moreover, the boiling temperature at normal pressure of the compound having an ethylenically unsaturated group is more preferably 150°C or greater. When the boiling temperature of the compound having an ethylenically unsaturated group is less than 120°C, the evaporation rate of the compound is large, and thereby odor is generated, and the work environment sometimes worsen.

For example, di(meth)acrylate of alkylene oxide additive of bisphenol compound is used as the compound having an ethylenically unsaturated group. Di(meth)acrylate of alkylene oxide additive of bisphenol compound is obtained by adding alkylene oxide such as ethylene oxide, propylene oxide, etc. to phenolic hydroxyl group of bisphenol compound such as bisphenol A, bisphenol F, bisphenol S, etc. and further reacting with (meth)acylic acid. Di(meth)acrylate of alkylene oxide additive of bisphenol compound is contained in the composition, in order to obtain abrasion resistance and durability.

Specific examples of di(meth)acrylate of alkylene oxide additive of bisphenol compound for use in the present invention include di(meth)acrylate of 2 mol-ethylene oxide additive of bisphenol A, di(meth)acrylate of 4 mol-ethylene oxide additive of bisphenol A, di(meth)acrylate of 6 mol-ethylene oxide additive of bisphenol A, di(meth)acrylate of 10 mol-ethylene oxide additive of bisphenol A, di(meth)acrylate of 2 mol-propylene oxide additive of bisphenol A, di(meth)acrylate of 4 mol-propylene oxide additive of bisphenol A, di(meth)acrylate of 10 mol-propylene oxide additive of bisphenol A, di(meth)acrylate of 2 mol-ethylene oxide additive of bisphenol F, di(meth)acrylate of 4 mol-ethylene oxide additive of bisphenol F, di(meth)acrylate of 2 mol-propylene oxide additive of bisphenol F, di(meth)acrylate of 4 mol-propylene oxide additive of bisphenol F, etc..

Di(meth)acrylate of alkylene oxide additive of bisphenol compound for use in the present invention is contained in the compound having an ethylenically unsaturated group preferably in a range of from 20 to 80 weight %, more preferably in a range of from 30 to 70 weight %. When the compound having an ethylenically unsaturated group contains di(meth)acrylate of alkylene oxide additive of bisphenol compound of less than 20 weight %, abrasion resistance and durability of the cured coating film are insufficient. In contrast, when the compound having an ethylenically unsaturated group contains di(meth)acrylate of alkylene oxide additive of bisphenol compound of more than 80 weight %, the viscosity of the photocurable coating composition for road markings is high, and thereby spray coating of the composition is sometimes difficult.

For example, (meth)acrylate having an alicyclic group is used as another useful compound having an ethylenically unsaturated group. (Meth)acrylate having an alicyclic group is a compound having an alicyclic group and (meth)acryloyl group within the same molecule. (Meth)acrylate having an alicyclic group is contained in the composition, in order to improve an adhesion to the road surface.

Specific examples of (meth)acrylate having an alicyclic group for use in the present invention include cyclohexyl(meth)acrylate, 4-tert-butylcyclohexyl(meth)acrylate, dicyclopentanyl(meth)acrylate, dicyclopentenyl(meth)acrylate, dicyclopentanyloxyethyl(meth)acrylate, dicyclopentenyloxyethyl(meth)acrylate, isobornyl(meth)acrylate, etc..

(Meth)acrylate having an alicyclic group for use in the present invention is contained in the compound having an ethylenically unsaturated group preferably in a range of from 5 to 40 weight %, more preferably in a range of from 10 to 35 weight %. When the compound having an ethylenically unsaturated group contains less than 5 weight % of (meth)acrylate having an alicyclic group, adhesion to the road surface is insufficient. In contrast, when the compound having an ethylenically unsaturated group contains more than 40 weight % of (meth)acrylate having an alicyclic group, the viscosity of the photocurable coating composition is low, and thereby dispersibility and stability of the pigment and curability of the composition sometimes worsen.

In addition, for example, N-vinyl amide is used as another useful compound having an ethylenically unsaturated group. N-vinyl amide is the compound in which nitrogen atom forming amide group is connected directly a vinyl group. N-vinyl amide has a large copolymerization rate with a (meth)acryloyl group. In addition, N-vinyl amide can improve the photocuring rate, because a polymerization inhibition due to oxygen, which is characteristic problem of radical polymerization of an ethylenically unsaturated connection, does not relatively cause by N-vinyl amide. Therefore, N-vinyl amide is preferably useful to the coating composition for road markings of the present invention.

Specific examples of N-vinyl amide for use in the present invention include N-vinyl pyrrolidone, N-vinyl caprolactam, N-vinyl formamide, N-vinyl acetamide, N-vinyl-N-methyl acetamide, etc..

N-vinyl amide for use in the present invention is contained in the compound having an ethylenically unsaturated group preferably in a range of from 3 to 30 weight %, more preferably in a range of from 5 to 25 weight %. When N-vinyl amide is contained in the compound in the above range, improved photocuring rate can be obtained. When the compound having an ethylenically unsaturated group contains less than 3 weight % of N-vinyl amide, sufficient photocuring rate sometimes cannot be obtained. In contrast, when the compound having an ethylenically unsaturated group contains more than 30 weight % of N-vinyl amide, water resistance and adhesion to the road surface of the cured coating film sometimes decrease.

The compounds having an ethylenically unsaturated group beside di(meth)acrylate of alkylene oxide additive of bisphenol compound, (meth)acrylate having an alicyclic group, and N-vinyl amide can be furthermore contained in the photocurable coating composition for road markings, as far as the viscosity of the compounds having an ethylenically unsaturated group is preferably within the aforementioned range.

The compounds having an ethylenically unsaturated group may be oligomer and monomer. The monomer is further classified into a monofunctional monomer having one unsaturated group and a polyfunctional monomer having two or more unsaturated groups within the molecule.

The oligomer is a compound having two or more ethylenically unsaturated groups within one molecule and governing various properties of the cured film obtained by the radical polymerization, such as abrasion resistance, durability, weatherability and elongation. The monofunctional monomer is blended for the purpose of reducing the viscosity of the composition of the present invention and thereby improving coatability and workability, and at the same time for increasing adhesion to the road surface. The polyfunctional monomer is blended for the purpose of reducing the viscosity of the composition, thereby improving coatability and workability, and for increasing the curability.

Specific examples of the oligomer having an ethylenically unsaturated group for use in the present invention include an epoxy (meth)acrylate resin, a urethane (meth)acrylate resin, a polyester (meth)acrylate resin, an amine modified polyester (meth)acrylate resin, a polyether (meth)acrylate resin, an amine modified polyether (meth)acrylate, a polybutadiene (meth)acrylate resin, a silicone (meth)acrylate resin, an unsaturated polyester resin, etc..

Specific examples of the monofunctional monomer for use in the present invention include hydroxy group-containing monomers such as ethoxydiethylene glycol (meth)acrylate, methoxytriethylene glycol (meth)acrylate, methoxydipropylene glycol (meth)acrylate, phenoxyethyl (meth)acrylate, phenoxydiethylene glycol (meth)acrylate, N-acryloyl morpholine, tetrahydrofurfuryl (meth)acrylate, 2-hydroxyethyl (meth)acrylate, 2-hydroxypropyl (meth)acrylate, and 2-hydroxy-3-phenoxypropyl (meth)acrylate; amino group-containing monomers such as N,N-dimethylaminoethyl (meth)acrylate and N,N-dimethylaminopropyl(meth)acrylamide; acidic group-containing monomers such as (meth)acrylic acid, 2-(meth)acryloyloxyethylsuccinic acid, 2-(meth)acryloyloxyethylphthalic acid, and 2-acryloyloxyethyl acid phosphate; and hydrolyzable silyl group-containing monomers such as γ-methacryloxypropyltrimethoxysilane and vinyltriethoxysilane.

Specific examples of the polyfunctional monomer for use in the present invention include diethylene glycol di(meth)acrylate, triethylene glycol di(meth)acrylate, tripropylene glycol di(meth)acrylate, 1,3-butanediol di(meth)acrylate, 1,4-butanediol di(meth)acrylate, neopentyl glycol di(meth)acrylate, 1,6-hexanediol di(meth)acrylate, 1,9-nonanediol di(meth)acrylate, trimethyolpropane tri(meth)acrylate, ethylene oxide modified trimethyolpropane tri(meth)acrylate, propylene oxide modified trimethyol propane tri(meth)acrylate, pentaerythritol tri(meth)acrylate, pentaerythritol tetra(meth)acrylate, etc.. More specific examples thereof include those described in UV · EB Koka Gijutsu no O'yo to Shijo (Application and Market of UV · EB Curing Technology), pp. 12-14 and pp. 20-31, CMC (1989).

Below, photopolymerization initiator contained in the photocurable coating composition for road markings of the present invention will be explained.

In the present invention, The photopolymerization initiator is preferably at least one selected from the group consisting of a compound comprising the cationic dye represented by formula (1) and the quaternary organic borate-type sensitizer represented by formula (2), and compounds represented by formulas (3) and (4).

D⁺ · A₁⁻ (1)

(wherein D⁺ represents a cation having an absorption maximum wavelength in the wavelength region of from 400 to 1,200 nm, and A₁⁻ represents an optional anion) 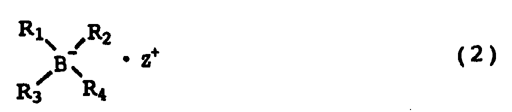 (wherein R₁, R₂, R₃ and R₄ each independently represents an alkyl group, an aryl group, an aralkyl group, an alkenyl group, an alkynyl group, a silyl group, a heterocyclic group or a halogen atom, which may have a substituent, and Z⁺ represents an optional cation) 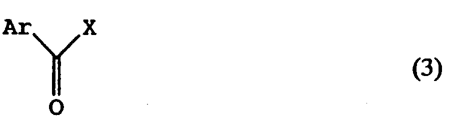 (wherein Ar represents an aryl group which may have a substituent, X represents an alkyl group, an alicyclic group, a benzyl group, an alkoxycarbonyl group, a benzoyl group, an aryl group, which may have a substituent or a phosphinoyl group having a substituent,); 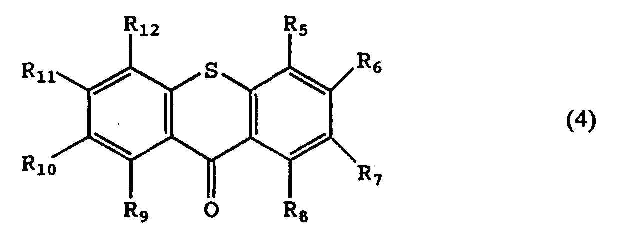 (wherein R₅, R₆, R₇, R₈, R₉, R₁₀, R₁₁ and R₁₂ each independently represents a hydrogen atom, an alkyl group having 1 to 8 carbon atoms, an alkoxy group having 1 to 8 carbon atoms, or a halogen atom).

When the cationic dye represented by formula (1) and the quaternary organic borate-type sensitizer represented by formula (2) are used in combination, in particular, the curability inside of the coated film comprising the photocurable coating composition for road markings can be improved. In other words, when the cationic dye represented by formula (1) and the quaternary organic borate-type sensitizer represented by formula (2) are used in combination, decomposition takes place by the light at a wavelength of from 400 to 1,200 nm, as a result, the color of the cationic dye disappears and at the same time, radical polymerization is initiated. If the quaternary organic borate-type sensitizer is not present together, the decolorization reaction of the cationic dye may not proceed satisfactorily or the polymerization reaction is difficult to occur. However, when a quaternary organic borate-type sensitizer is rendered to be present together, the decolorization reaction of the cationic dye perfectly proceeds and the polymerization initiating reaction efficiently takes place.

D⁺ in formula (1) for use in the present invention is a cationic compound having an absorption maximum wavelength in the wavelength region of from 400 to 1,200 nm. The absorption maximum wavelength can be determined by dissolving a cationic dye in a general solvent such as water, methanol, ethanol, toluene, xylene, acetone, methyl ethyl ketone, ethyl acetate, n-butyl acetate, N,N-dimethylformamide, N-methyl-2-pyrrolidone, chloroform, methylene chloride, acetonitrile and dimethyl sulfoxide, and measuring the absorption spectrum of the compound in the region of from ultraviolet ray to near infrared ray using a commonly used spectrophotometer having a capability to this effect (for example, Ubest V-570 manufactured by Japan Spectroscopic Co., ltd. or UV-3100 manufactured by Shimadzu Corporation). The method for determining the absorption maximum wavelength is, however, not limited thereto. D⁺ is preferably a polymethine-type compound, a xanthene-type compound, a triarylmethane-type compound, a diarylmethane-type compound, an acridine-type compound, an azine-type compound, an oxazine-type compound or a thiazine-type compound. In particular, polymethine-type and triarylmethane-type compounds are superior in the polymerization initiating ability and the decolorizing ability and accordingly, suitably used in the present invention.

Specific examples of A₁⁻ in formula (1) include halide anions such as Cl⁻, Br⁻ and I⁻; sulfonate anions such as benzene sulfonate anion, p-toluene sulfonate anion, methane sulfonate anion and 1-naphthalene sulfonate anion; borate anions such as tetraphenyl borate, tetraanisyl borate, n-butyltriphenyl borate, tetrabenzyl borate and tetrafluoro borate; and various anions such as ClO₄⁻, PF₆⁻ and SbF₆⁻, however, the present invention is by no means limited thereto.

Specific examples of the structure of the cationic dye are shown in Table 1 below, however, the present invention is not limited thereto by any means. These cationic dyes may be used, if desired, in combination of two or more thereof and the mixing ratio may be freely selected.

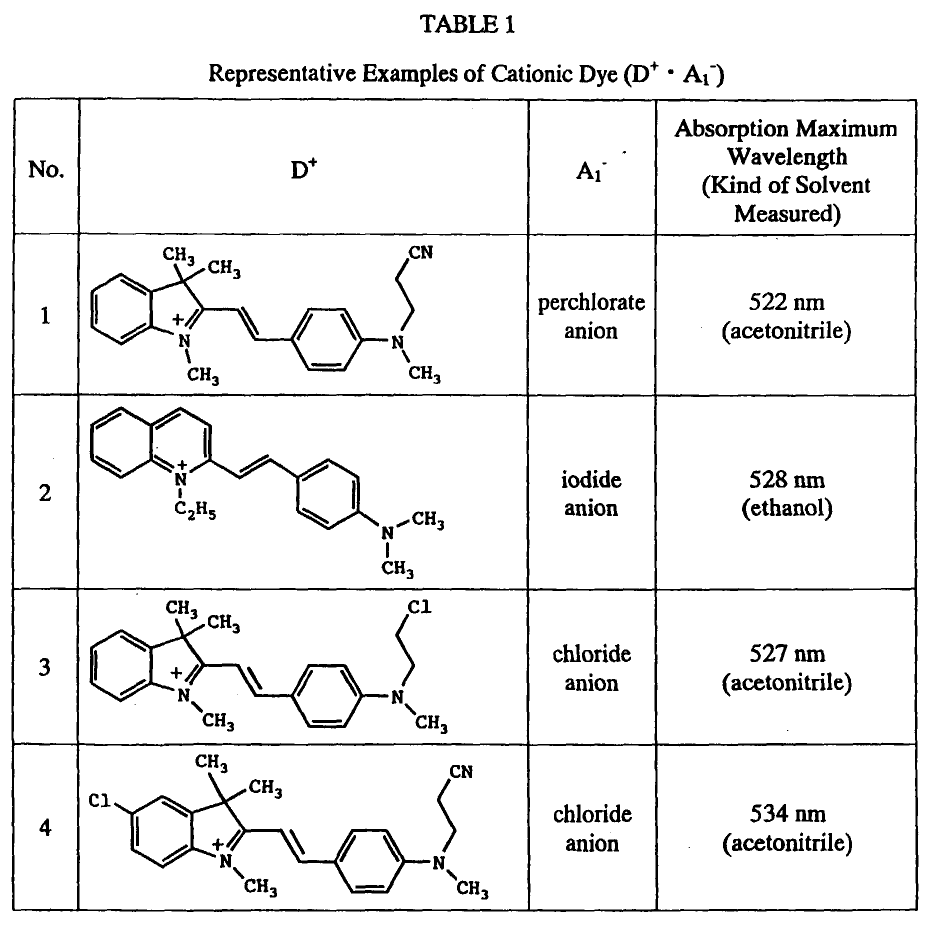

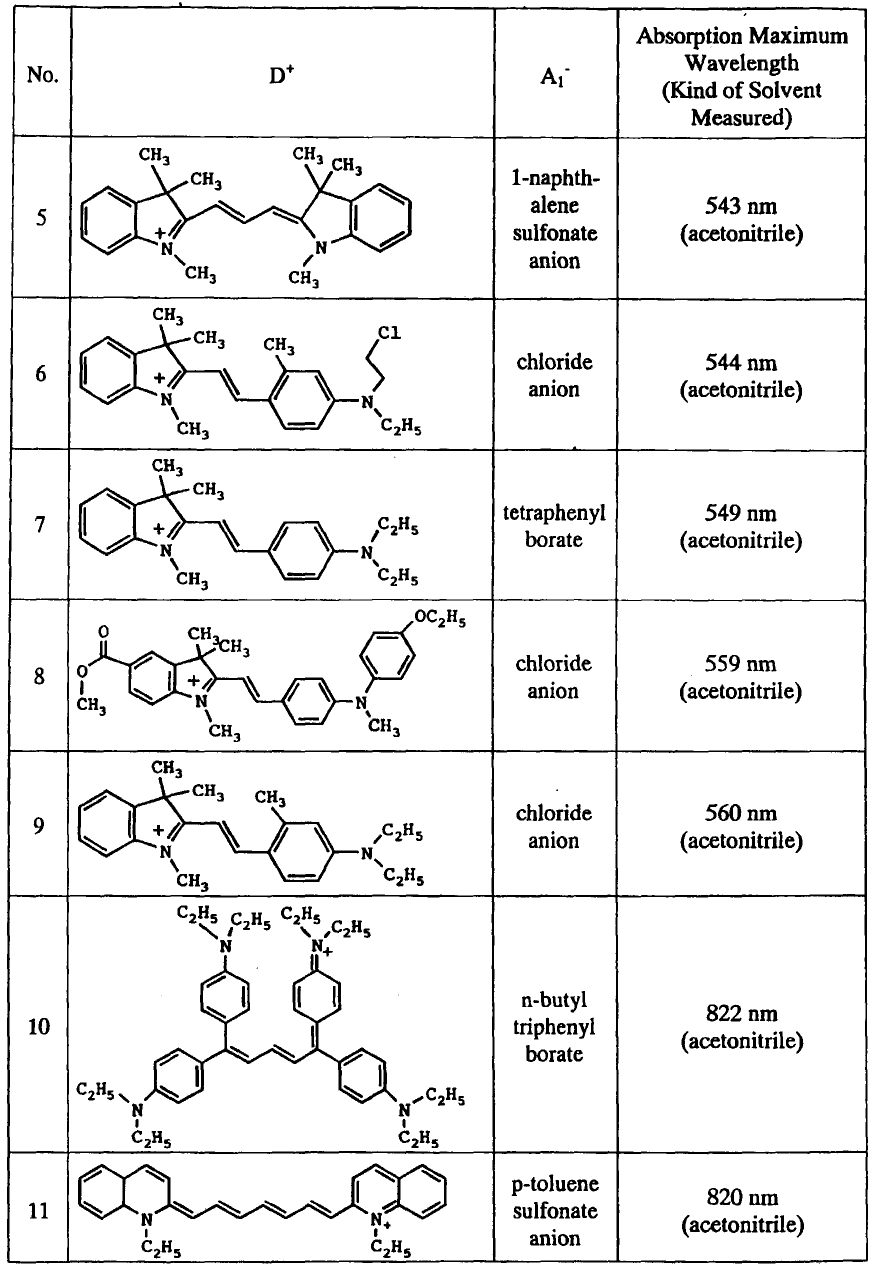

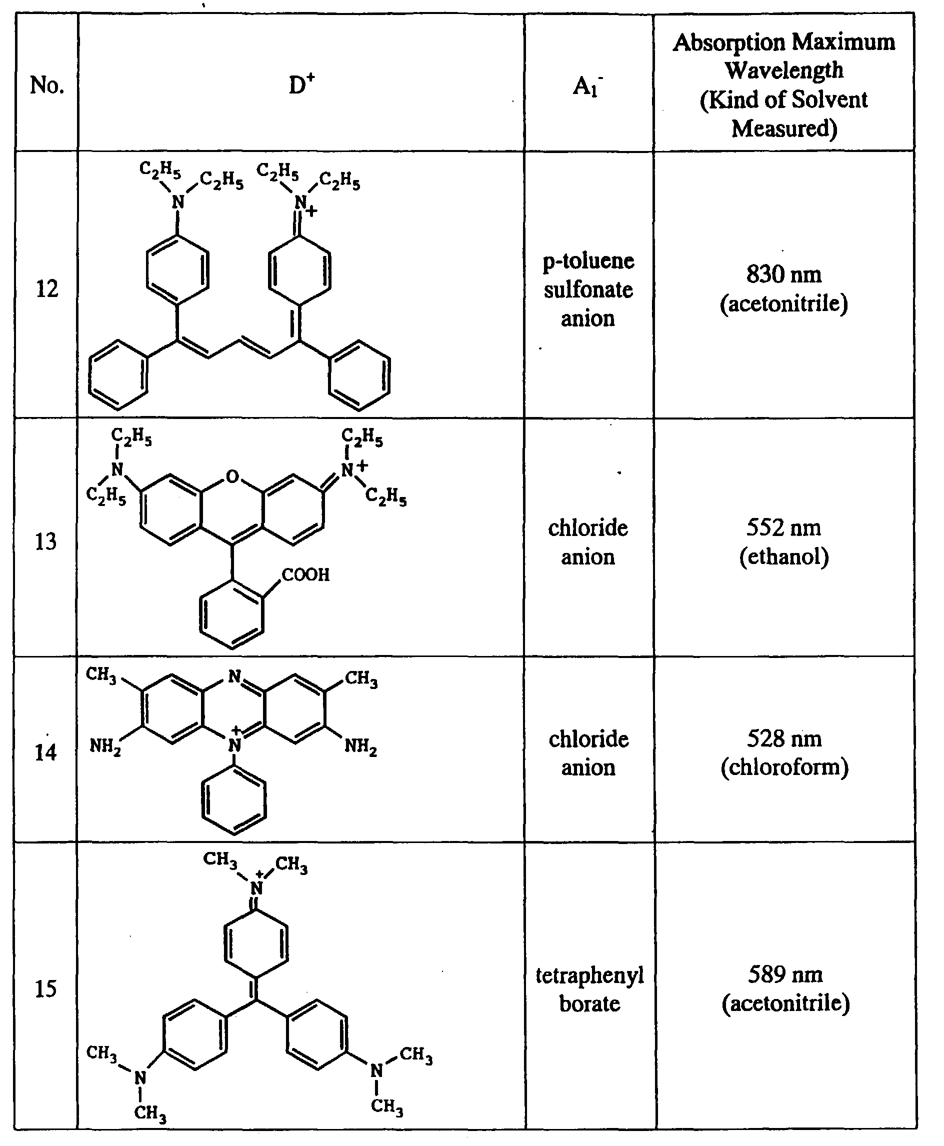

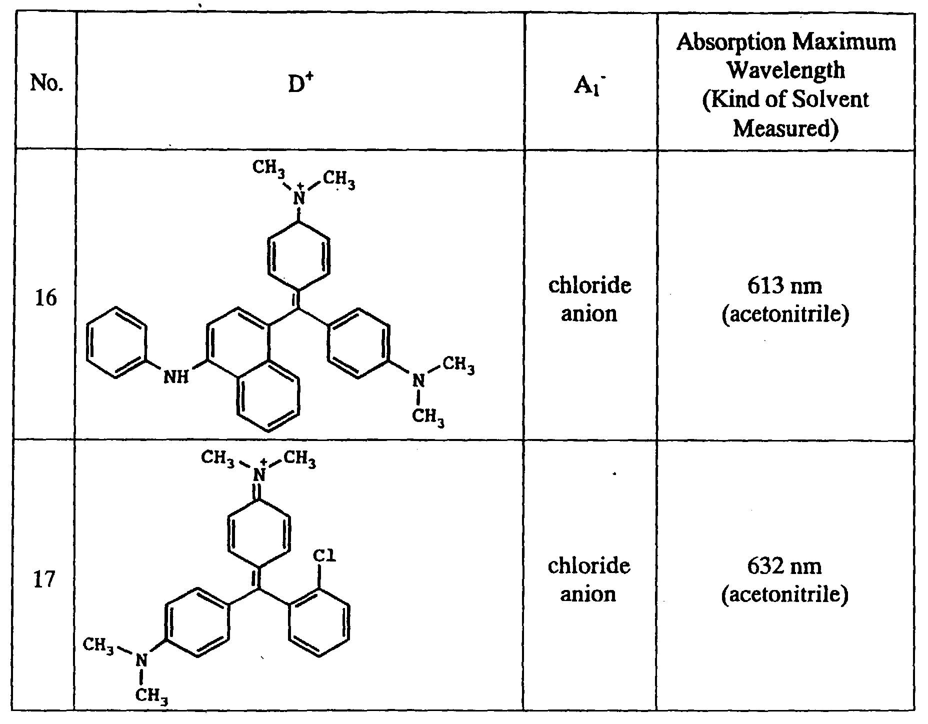

The absorption maximum wavelengths shown in Table 1 were determined using an ultraviolet-visible-near infrared spectrophotometer, Ubest V-570, manufactured by Japan Spectroscopic Co., Ltd.

The quaternary organic borate-type sensitizer for use in the present invention consists of a quaternary organic boron compound and Z⁺ as shown in formula (2).

In formula (2), the alkyl group, the aryl group, the aralkyl group, the alkenyl group, the alkynyl group, the silyl group and the heterocyclic group represented by R₁, R₂, R₃ or R₄ each may have any substituent. Specific examples of the substituent include a methyl group, an ethyl group, a n-propyl group, an isopropyl group, a n-butyl group, a sec-butyl group, an isobutyl group, a tert-butyl group, a n-octyl group, a n-dodecyl group, a cyclopentyl group, a cyclohexyl group, a phenyl group, a tolyl group, a xylyl group, an anisyl group, a biphenyl group, a naphthyl group, a benzyl group, a phenethyl group, a diphenylmethyl group, a methoxy group, an ethoxy group, a n-propoxy group, an isopropoxy group, a n-butoxy group, a sec-butoxy group, a tert-butoxy group, a methylenedioxy group, an ethylenedioxy group, a phenoxy group, a naphthoxy group, a benzyloxy group, a methylthio group, a phenylthio group, a 2-furyl group, a 2-thienyl group, a 2-pyridyl group and a fluoro group, however, the present invention is by no means limited these examples.

Specific examples of the quaternary boron compound represented by formula (2) include n-butyltriphenyl borate, n-octyltriphenyl borate, n-dodecyltriphenyl borate, sec-butyltriphenyl borate, tert-butyltriphenyl borate, benzyltriphenyl borate, n-butyltri(p-anisyl) borate, n-octyltri(p-anisyl) borate, n-dodecyltri(p-anisyl) borate, n-butyltri(p-tolyl) borate, n-butyltri(o-tolyl) borate, n-butyltri(4-tert-butylphenyl) borate, n-butyltri(4-fluoro-2-methylphenyl) borate, n-butyltri(4-fluorophenyl) borate, n-butyltri(1-naphthyl) borate, n-butyltri[1-(4-methylnaphthyl)] borate, triphenylsityltriphenyl borate, trimethylsilyltriphenyl borate, tetra-n-butyl borate, di-n-butyldiphenyl borate and tetrabenzyl borate. Of these, compounds having a structure such that R₁ is an alkyl group and R₂, R₃ and R₄ each is an aryl group are well balanced between the stability and the curability and suitable for the photocurable coating composition for road markings of the present invention.

Specific examples of Z⁺ in formula (2) include tetramethylammonium, tetraethylammonium, tetra-n-butylammonium, tetraoctylammonium, N-methylquinolinium, N-ethylquinolinium, N-methylpyridinium, N-ethylpyridinium, tetramethylphosphonium, tetra-n-butylphosphonium, trimethylsulfonium, triphenylsulfonium, trimethylsulfoxonium, diphenyliodonium, di(4-tert-butylphenyl)iodonium, lithium cation, sodium cation, etc..

Any combination of the quaternary organic boron compound and Z⁺ may be used in the present invention. The present invention is, however, not limited to those examples by any means. The quaternary organic borate-type sensitizers may be used in combination of two or more thereof.

The compound represented by formula (3) improves mainly curability of the surface layer of the coated film comprising the photocurable coating composition for road markings. The compound represented by formula (3) is a polymerization initiator used is a normal photopolymerization initiator which is excited by the irradiation of ultraviolet ray at 400 nm or less and generates a radical.

In formula (3), the aryl group represented by Ar may have any substituent. Specific examples of the substituent include a methyl group, an ethyl group, a n-propyl group, an isopropyl group, a n-butyl group, a sec-butyl group, an isobutyl group, a tert-butyl group, a n-octyl group, a n-dodecyl group, a cyclohexyl group, a phenyl group, a tolyl group, an anisyl group, a naphthyl group, a benzyl group, a phenethyl group, a methoxy group, an ethoxy group, a n-propoxy group, an isopropoxy group, a n-butoxy group, a sec-butoxy group, a tert-butoxy group, a 2-hydroxyethoxy group, a phenoxy group, a naphthoxy group, a benzyloxy group, a hydroxy group, an acetoxy group, a benzoyloxy group, an acryloyloxy group, a methacryloyloxy group, a carboxyl group, a methoxycarbonyl group, an ethoxycarbonyl group, a benzoyl group, a naphthoyl group, an acetyl group, a propionyl group, a dimethylamino group, a diethylamino group, a morpholino group, a methylthio group, a phenylthio group, a 2-furfuryl group, a 2-thienyl group, a 2-pyridyl group, a 2-quinolinyl group, a fluoro group, a chloro group, a bromo group, etc., however, the present invention is by no means limited to these examples.

In formula (3), the alkyl group, the alicyclic group, the benzyl group, the alkoxy group, the carbonyl group, the benzoyl group and the aryl group represented by X each may have a substituent. Specific examples of the substituent include a methyl group, an ethyl group, a n-propyl group, an isopropyl group, a n-butyl group, a sec-butyl group, an isobutyl group, a tert-butyl group, a n-octyl group, a n-dodecyl group, a cyclohexyl group, a phenyl group, a tolyl group, an anisyl group, a naphthyl group, a benzyl group, a phenethyl group, a methoxy group, an ethoxy group, a n-propoxy group, an isopropoxy group, a n-butoxy group, a sec-butoxy group, a tert-butoxy group, a phenoxy group, a naphthoxy group, a benzyloxy group, a hydroxy group, an acetoxy group, a benzoyloxy group, a carboxyl group, a methoxycarbonyl group, an ethoxycarbonyl group, a benzoyl group, a naphthoyl group, an acetyl group, a propionyl group, a dimethylamino group, a diethylamino group, a morpholino group, a methylthio group, a phenylthio group, a 2-furfuryl group, a 2-thienyl group, a 2-pyridyl group, a 2-quinolinyl group, a fluoro group, a chloro group, a bromo group, etc., however, the present invention is by no means limited to these examples.

Specific examples of the substituent of the phosphinoyl group having a substituent represented by X in formula (3) include a methyl group, an ethyl group, a 2-ethylhexyl group, a n-propyl group, an isopropyl group, a n-butyl group, a sec-butyl group, an isobutyl group, a tert-butyl group, a n-octyl group, a 2,4,4-trimethylpentyl group, a cyclohexyl group, a phenyl group, a tolyl group, a 2,5-dimethylphenyl group, a mesityl group, a cumenyl group, a benzyl group, a phenethyl group, a benzoyl group, a 2,6-dichlorobenzoyl group, a 2,4,6-trimethylbenzoyl group, a 2,6-dimethoxybenzoyl group, a 2,6-diethoxybenzoyl group, a naphthoyl group, etc., however, the present invention is not limited to these examples by any means.

Specific examples of the compound represented by formula (3) include benzoyl-type compounds such as benzoin isobutyl ether, benzoin isopropyl ether, benzoin ethyl ether and benzyl dimethyl ketal; acetophenone-type compounds such as diethoxyacetophenone, 2-hydroxy-2-methyl-1-phenylpropan-1-one, 1-(4-isopropylphenyl)-2-hydroxy-2-methylpropan-1-one, 1-hydroxycyclohexyl phenyl ketone, 4-tert-butyl-trichloroacetophenone, 2-methyl-1-[4-(methylthio)phenyl]-2-morpholinopropanone-1 and 2-benzyl-2-dimethylamino-1-(4-morpholinophenyl)-butanone-1; glyoxy ester-type compounds such as methylphenylglyoxylate; benzophenone-type compounds such as benzopbenone, methyl benzoylbenzoate, hydroxybenzophenone, 4-phenylbenzophenone and acrylated benzophenone; acylphosphine oxide-type compounds such as 2,4,6-trimethylbenzoyldiphenylphosphine oxide; bisacylphosphin oxide type compounds such as bis(2,6-dimethoxybenzoyl)-2,4,4-trimethylpentylphosphine oxide, bis(2,6-dichlorobenzoyl)phenylphosphine oxide, bis(2,6-dichlorobenzoyl)-2,5-dimethylphenylphosphine oxide and bis(2,4,6-trimethylbenzoyl)phenylphosphine oxide.

The compound represented by formula (4) improves mainly curability of the surface layer of the coated film comprising the photocurable coating composition for road markings.

Specific examples of the compound represented by formula (4) include 2,4-diethylthioxanthone, isopropylthioxanthone, 2,4-diisopropylthioxantone and 1-chloro-4-propoxythioxanthone.

In general, the compound called a P1-type photoinitiator, such as a benzoin-type compound, an acetophenone-type compound, a glyoxy ester-type compound, an acylphosphine oxide-type compound, and an bisacylphosphine oxide-type compound,can be used alone by itself but an ultraviolet radial polymerization initiator which is a P2-type photoinitiator, such as a benzophenone-type compound and thioxanthone-type compound, is used in combination with a hydrogen-donating compound. Also in the case of a P1-type photoinitiator, if a hydrogen donator is used in combination, the curability is improved.

The hydrogen-donating compound is a compound capable of donating hydrogen to the initiator excited by light. Examples thereof include aliphatic amines such as triethanolamine and methyldiethanolamine, and aromatic amines such as 2-dimethylaminoethylbenzoic acid, ethyl 4- dimethylaminobenzoate, isobutyl 4-dimethylaminobenzoate and 4,4-dimethylaminobenzophenone.

The photopolymerization initiator for use in the present invention is contained in the photocurable coating composition for road markings in a range of from 0.1 to 15 parts by weight per 100 parts by weight of the compound having an ethylenically unsaturated group, more preferably in a range of from 0.5 to 10 parts by weight. When the amount added is less than 0.1 part by weight, photocuring rate sometimes does not proceed satisfactorily. In contrast, when it exceeds 15 parts by weight, the cured product is deteriorated in the physical properties due to the residual photopolymerization initiator.

More specifically, the amounts of each photopolymerization initiator added in the photocurable coating composition for road markings are as follows.

The cationic dye represented by formula (1) is used preferably in a range of from 0.001 to 2 parts by weight with respect to 100 parts by weight of the compound having an ethylenically unsaturated group, more preferably in a range of from 0.01 to 1 part by weight. When the amount added is less than 0.001 part by weight, polymerization inside of the photocurable coating composition does not proceed satisfactorily. In contrast, when it exceeds 2 parts by weight, the cured product is sometimes colored.

The quaternary organic borate-type sensitizer represented by formula (2) is preferably used in a range of from 0.005 to 5 parts by weight with respect to 100 parts by weight of the compound having an ethylenically unsaturated group, more preferably in a range of from 0.05 to 3 parts by weight. When the amount added is less than 0.005 part by weight, polymerization inside of the photocurable coating composition does not proceed satisfactorily, and the cured product may be colored due to insufficient proceeding of the decolorization reaction of the cationic dye. In contrast, when it exceeds 5 parts by weight, the cured product is easily deteriorated.

Each of the compounds represented by formulas (3) and (4) is preferably used in a range of from 0.1 to 10 parts by weight with respect to 100 parts by weight of the compound having an ethylenically unsaturated group, more preferably in a range of from 0.5 to 8 parts by weight. When the amount added is less than 0.1 part by weight, curing at the surface of the photocurable coating composition sometimes cannot be carried out in air. In contrast, when it exceeds 10 parts by weight, the cured product is easily deteriorated in the physical properties, the cured product is deteriorated by the residual ultraviolet radical polymerization initiator and disadvantageously colored yellow.

The photopolymerization initiator for use in the present invention, which is at least one selected from the group consisting of a compound comprising the cationic dye represented by formula (1) and the quaternary organic borate-type sensitizer represented by formula (2), and compounds represented by formulas (3) and (4), may be used either individually or in combination of two or more thereof. However, the photopolymerization initiator comprising the cationic dye represented by formula (1) and the quaternary organic borate-type sensitizer represented by formula (2) and the photopolymerization initiator represented by formulas (3) are preferable, because these photopolymerization initiators can sufficiently cure the both the surface and inside of the photocurable coating composition of the present invention.

The color pigment for use in the present invention is added for the purpose of increasing weatherability, visibility, covering power of the photocurable coating material for road markings. Specific examples of the color pigment include titanium oxide, chrome yellow, etc. More specifically, the color pigments described in Kaitei Shinpan, Ganryo Binran (Revised and New Edition, Pigment Handbook), compiled by Nippon Ganryo Gijutsu Kyokai (1989) may also be used.

The color pigment is blended preferably in a range of from 3 to 50 parts by weight with respect to 100 parts by weight of the compound having an ethylenically unsaturated group, and more preferably in a range of from 5 to 30 parts by weight. When the amount blended is less than 3 parts by weight, the visibility and hiding power are reduced, and the functions for road markings are deteriorated. Whereas when it exceeds 50 parts by weight, the viscosity of the photocurable coating composition excessively increases, and thereby the spraying the photocurable coating composition is difficult.

The extender pigment for use in the present invention is added for the purpose of increasing abrasion resistance and adhesion to the road surface of the photocurable coating composition for road markings. Specific examples of the extender pigment include inorganic extender pigments such as calcium carbonate, aluminum hydroxide, calcium sulfate, barium sulfate, talc, alumina, silicon oxide and glass powder. The extender pigment is blended preferably in a range of from 30 to 200 parts by weight with respect to 100 parts by weight of the compound having an ethylenically unsaturated group, and more preferably in a range of from 50 to 150 parts by weight. When the amount blended is less than 30 parts by weight, abrasion resistance and adhesion to the road surface are reduced. Whereas when it exceeds 200 parts by weight, the viscosity of the photocurable coating composition excessively increases, and thereby the spraying the coating composition becomes difficult.

The glass bead may be added in the photocurable coating composition for road markings for the purpose of increasing the light reflectivity of the coated film to thereby increase the visibility at night and at the same time for improving the photocurability inside the film. As the glass bead in the coated film has a smaller particle size, the curability is more improved but the reflective ability is more reduced. On the other hand, as the particle size increases, the glass bead more easily falls off from the coated film. Accordingly, the particle size of glass bead is preferably in a range of from 0.01 to 2.0 mm, more preferably in a range of from 0.05 to 1.0 mm. In particular, the glass bead having a particle size (No. 1: about 480 µm; No. 2: about 380 µm; No. 3: about 150 µm) described in JIS R 3301, Glass bead for coating composition for road markings, is most preferable. When the amount of glass beads mixed is small, the reflective ability is deteriorated when the glass beads interspersed are decreased due to abrasion by tires. Whereas when it is too large, the film is reduced in the strength. Accordingly, in the case of adding glass beads, the glass beads are suitably added in a range of from 30 to 400 parts by weight, preferably from 60 to 300 parts by weight, with respect to 100 parts by weight of the compound having an ethylenically unsaturated group.

The photocurable coating composition for road markings of the present invention may contain an organic polymer compound for the purpose of imparting appropriate elongation to the cured product and allowing the cured product to follow expansion of the asphalt due to change in the temperature, thereby inhibiting generation of cracks. For imparting appropriate elongation to the photocured product of the composition of the present invention, a known method of, for example, blending a low molecular weight plasticizer such as di-n-butyl phthalate and dioctyl phthalate, or a compound having an ethylenically unsaturated group and capable of forming a homopolymer having a glass transition temperature lower than the temperature on use is also very effective but by blending an organic polymer compound, the cured product can have appropriate elongation and higher abrasion resistance at the same time. The organic polymer compound as used herein is a homopolymer or copolymer of an organic monomer and a compound having a number average molecular weight of 1,000 or more.

Examples of the organic polymer compound include polystyrene resin, polyurethane resin, polyvinylacetal resin, polyvinylbutyral resin, saturated polyester resin, chlorinated polyolefin; rubber components such as butadiene rubber, styrene-butadiene rubber, nitrile rubber and acryl rubber; various types of thermoplastic elastomers such as polystyrene type, polyolefin type, polydiolefin type, polyurethane type and polyester type; and homopolymers or copolymers of (meth)acrylic acid alkyl ester such as polyethyl (meth)acrylate and polybutyl (meth)acrylate. Of these, in view of compatibility with the compound having an ethylenically unsaturated group, saturated polyester resin and homopolymers or copolymers of a α-alkyl(meth)acrylate are preferred in the present invention. The amount of the organic polymer compound blended is from 3 to 30 parts by weight with respect to 100 parts by weight of the compound having an ethylenically unsaturated group, so that the object of the present invention can be achieved. If the amount blended is less than 3 parts by weight, the photocured product has no elongation and cannot follow the extension of asphalt due to change in the temperature, whereas if it exceeds 30 parts by weight, the photocurability is extremely reduced. The amount blended is preferably in a range of from 5 to 25 parts by weight.

The photocurable coating composition for road markings of the present invention is in the form of a solvent-free coating material but may also be used by diluting it with a solvent as conventionally employed. In this case, the solvent used may be a solvent commonly used in conventional coatinging materials and examples thereof include aromatic hydrocarbons such as toluene and xylene; alcohols such as ethanol, 2-propanol and 1-butanol; ketones such as methyl ethyl ketone and methyl isobutyl ketone; ethers such as diethylene glycol dimethyl ether and triethylene glycol dimethyl ether; esters such as ethyl acetate and butyl acetate; and monoethers of ethylene glycol such as methyl cellosolve and ethyl cellosolve. These solvents may be used individually or in combination of two or more thereof. The organic solvent is used so as to reduce the viscosity of the composition and improve the workability, adhesion to asphalt and the like.

The photocurable coating composition for road markings of the present invention may contain a thermal polymerization inhibitor for the purpose of preventing polymerization during the storage. Specific examples of the thermal polymerization inhibitor which can be added to the photocurable coating composition of the present invention include p-methoxyphenol, hydroquinone, alkyl-substituted hydroquinone, catechol, tert-butyl catechol and phenothiazine.

The photocurable coating composition for road markings of the present invention may of course contain an organic peroxide as a thermoplymerization initiator for the purpose of accelerating curing. Specific examples of the organic peroxide include benzoyl peroxide, dicumyl peroxide, di-tert-butyl peroxide, tert-butyl peroxybenzoate, tert-butyl peroxy-2-ethylhexanoate, tert-butyl peroxylaurate, tert-butyl hydroperoxide, dicumyl hydroperoxide, 3,3,5-trimethylhexanoyl peroxide, diisopropyl peroxydicarbonate. For more accelerating the curing, a cobalt salt such as cobalt naphthenate and cobalt octylate, or an amine compound such as dimethylaniline, may be used in combination with the above-described organic peroxide.

The photocurable coating composition for road markings of the present invention may further contain general additives for coating materials so as to improve workability, physical properties of the coating material or physical properties of the coated film. Examples of the additive for coating materials include a dispersant, a precipitation inhibitor, a defoaming agent, a leveling agent, a running inhibitor and a wax.

Furthermore, the photocurable coating composition for road markings of the present invention may contain an antioxidant, a photostabilizer or an ultraviolet absorbent for the purpose of preventing photodeterioration caused after coatinging and curing of the composition on the road surface. Examples of the antioxidant include hindered phenol-type antioxidants such as 2,4,6-tri-tert-butylphenol, 2,6-di-tert-butyl-p-cresol, N,N'-hexamethylene bis(3,5-di-tert-butyl-4-hydroxy-hydrocinnamide), octadecyl-3-(3,5-di-tert-butyl-4-hydroxyphenyl)propionate, 3,5-di-tert-butyl-4-hydroxy-benzylphosphonate-diethyl ester, isooctyl-3-(3,5-di-tert-butyl-4-hydroxyphenyl)propionate and tris(3,5-di-tert-butyl-4-hydroxybenzyl)isocyanurate; phosphite-type antioxidants such as triphenylphosphite, tris(2,4-di-tert-butylphenyl)phosphite, tris(nonylphenyl)phosphite, diphenylisodecylphosphite, phenyldiisodecylphosphite, cyclic neopentanetetrayl bis(octadecylphosphite) and 2,2-methylene bis(4,6-di-tert-butylphenyl)octylphosphite; and thioether-type antioxidants such as dilauryl 3,3'-thiodipropionate, dimyristyl 3,3-thiodipropionate and pentaerythrityl tetrakis(3-laurylthiopropionate).

Examples of the photostabilizer include hindered amine-type photostabilizers such as bis(2,2,6,6-tetramethyl-4-piperidyl)sebacate, bis(1,2,2,6,6-pentamethyl-4-piperidyl)sebacate, bis(1,2,2,6,6-pentamethyl-4-piperidyl) 2-(3,5-di-tert-butyl-4-hydroxybenzyl)-2-n-butylmalonate and 4-benzoyloxy-2,2,6,6-tetramethylpiperidine.

Examples of the ultraviolet absorbent include benzotriazole-type compounds such as 2-(3,5-di-tert-butyl-2-hydroxyphenyl)benzotriazole, 2-(3-tert-butyl-5-methyl-2-hydroxyphenyl)benzotriazole and 2-(3,5-di-tert-amyl-2-hydroxyphenyl)benzotriazole; benzoate-type compounds such as 2,4-di-tert-butylphenyl-3,5-di-tert-butyl-4-hydroxy-benzoate; salicylate-type compounds such as p-tert-butylphenylsalicylate and p-octylphenylsalicylate; benzophenone-type compounds such as 2-hydroxy-4-octoxybenzophenone and 2-hydroxy-4-dodecyloxybenzophenone; cyanoacrylate-type compounds such as ethyl-2-cyano-3,3'-diphenyl acrylate and 2-ethylhexyl-2-cyano-3,3'-diphenyl acrylate; and metal complex compounds such as nickel bis(octylphenyl)sulfide and nickel dibutyldithiocarbamate.

The light source, which emits ray absorbed by photopolymerization initiator, can be used to cure the photocurable coating composition for road markings of the present invention. Examples of the light source include a high-pressure mercury lamp, an extra-high pressure mercury lamp, a metal halide lamp, a short arc metal halide lamp, a xenon lamp, and sunlight. When these light sources are used, the expose energy needed for curing the photocurable coating composition for road markings of the present invention is in a range of from 0.05 to 1.5 J/cm², preferably in a range of from 0.1 to 1.0 J/cm². When the expose energy is less than 0.05 J/cm², the polymerization at the surface and inside of the cured coatings sometimes does not proceed satisfactorily. Whereas when it exceeds 1.5 J/cm², the practical curing rate sometimes cannot be obtained. For example, the expose energy is measured using a radiometer (marketed by Ushio inc.; trade name: UIT-102; detector: UVD-365PD).

The present invention is described below by referring to the Examples, however, the present invention should not be construed as being limited to these Examples.

### EXAMPLES

### Preparation of Various Photopolymerization Initiators:

Photopolymerization Initiator Solutions PI-1, PI-2, PI-3 and PI-4 were prepared each to have a composition shown in Table 2 and used in the Examples.

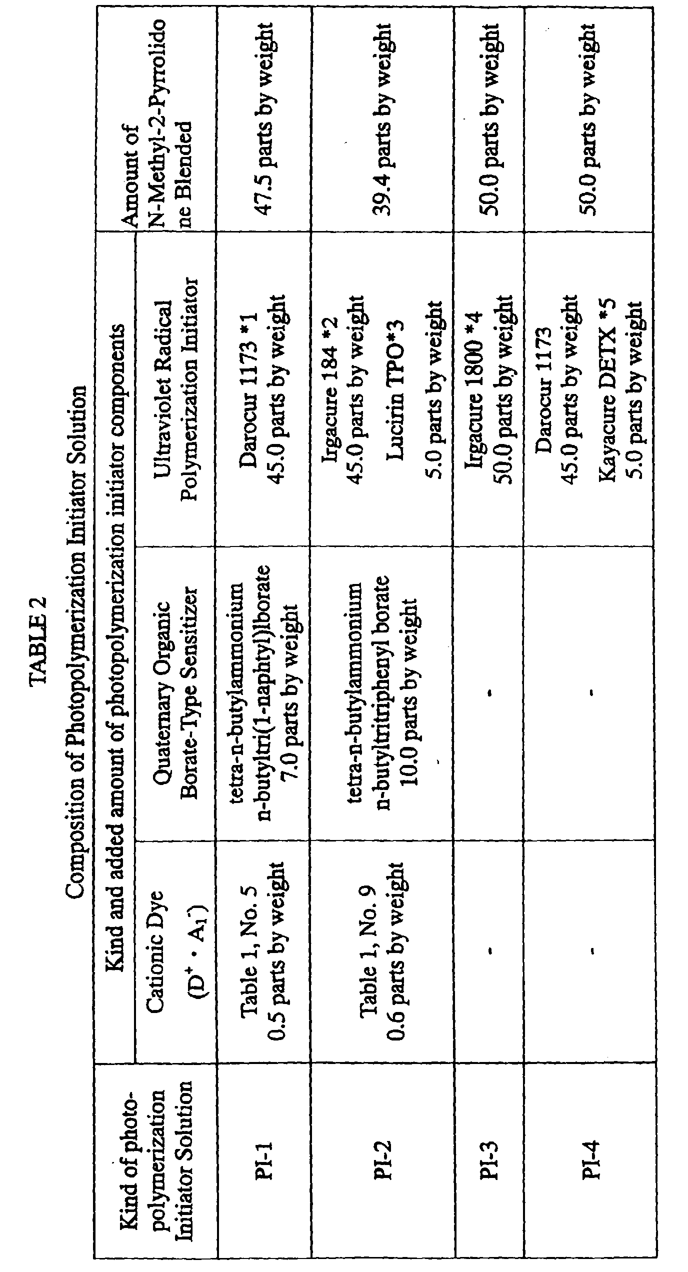

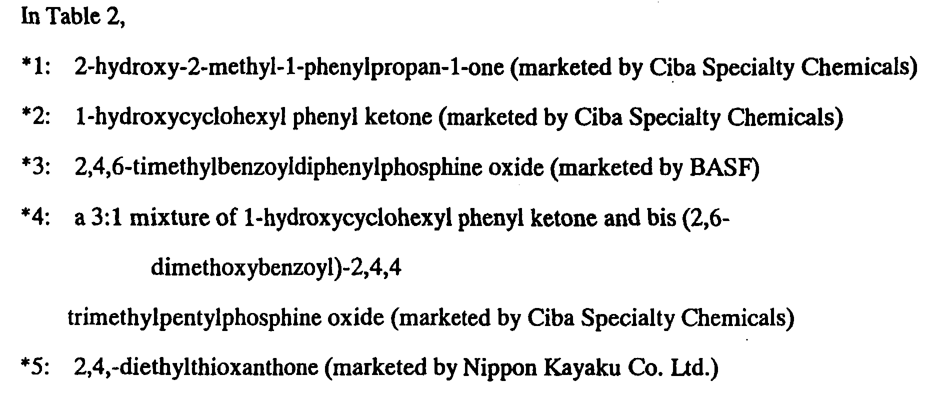

### Synthesis Example Comparative Resin

200 parts by weight of ion exchange water were introduced into a separable flask provided with a reflux pipe, a nitrogen introduction pipe, and an agitator. Then, 2 parts by weight of polyvinyl alcohol were added and dissolved. 3 parts by weight of azobisisobutylonitrile were added to a monomer mixture comprising 60 parts by weight of methyl methacrylate, 20 parts by weight of butyl acrylate and 20 parts by weight of n-butyl methacrylate, and then the obtained mixture was added into the flask. After that, the temperature of the mixture was raised to 80°C and maintained for 3 hours while introducing nitrogen gas and mixing. The temperature of the mixture was further raised to 100°C, and maintained for 1 hour. The residual monomer was removed. The acrylic resin -1 was marketed by recovering polymer particles from the obtained reaction product, then dehydrating and drying them.

### Photocurability Test

Coating compositions for road markings, which have compositions shown in Table 3, were prepared by blending a photocurable resin, a color pigment (titanium dioxide), an extender pigment (calcium carbonate), additives (dispersant and precipitation inhibitor) and a photopolymerization initiator solution, and photocurability, spray coating property, and coating film capability of the compositions obtained were examined. The photocurability test, spray coating test, and capabilities of coated film test were performed as follows.

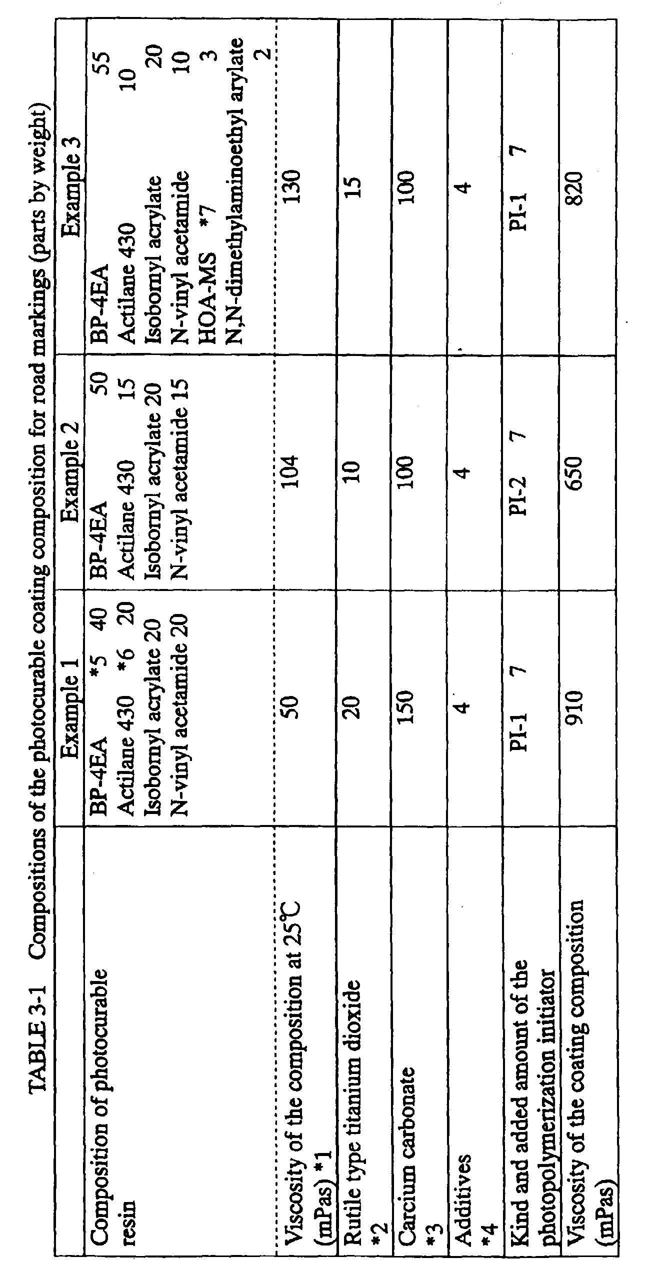

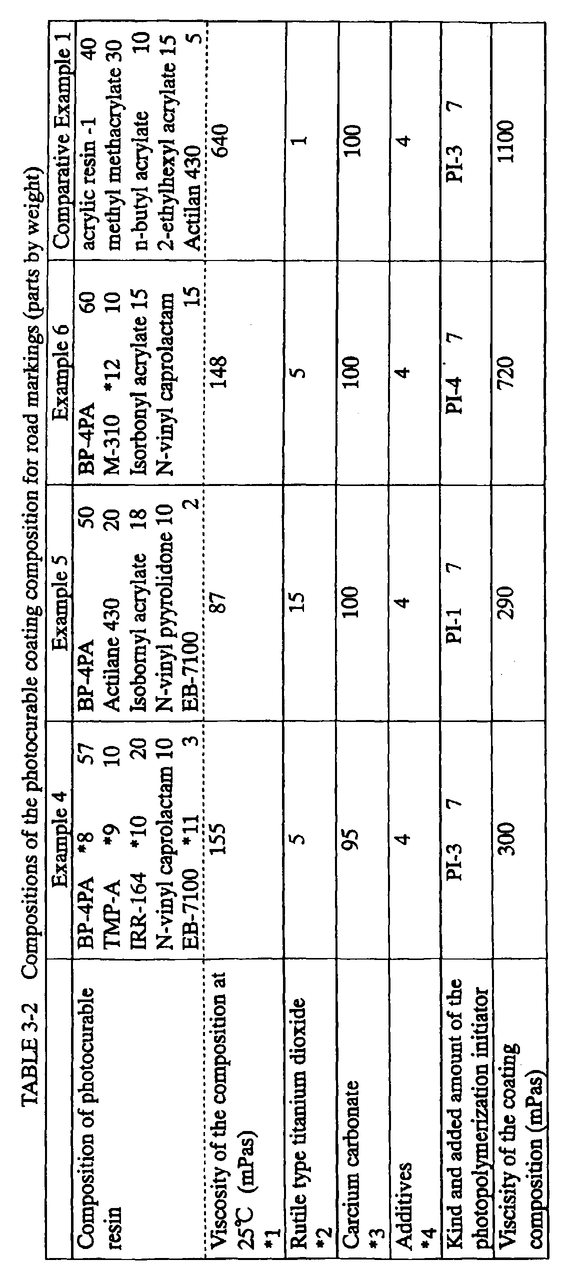

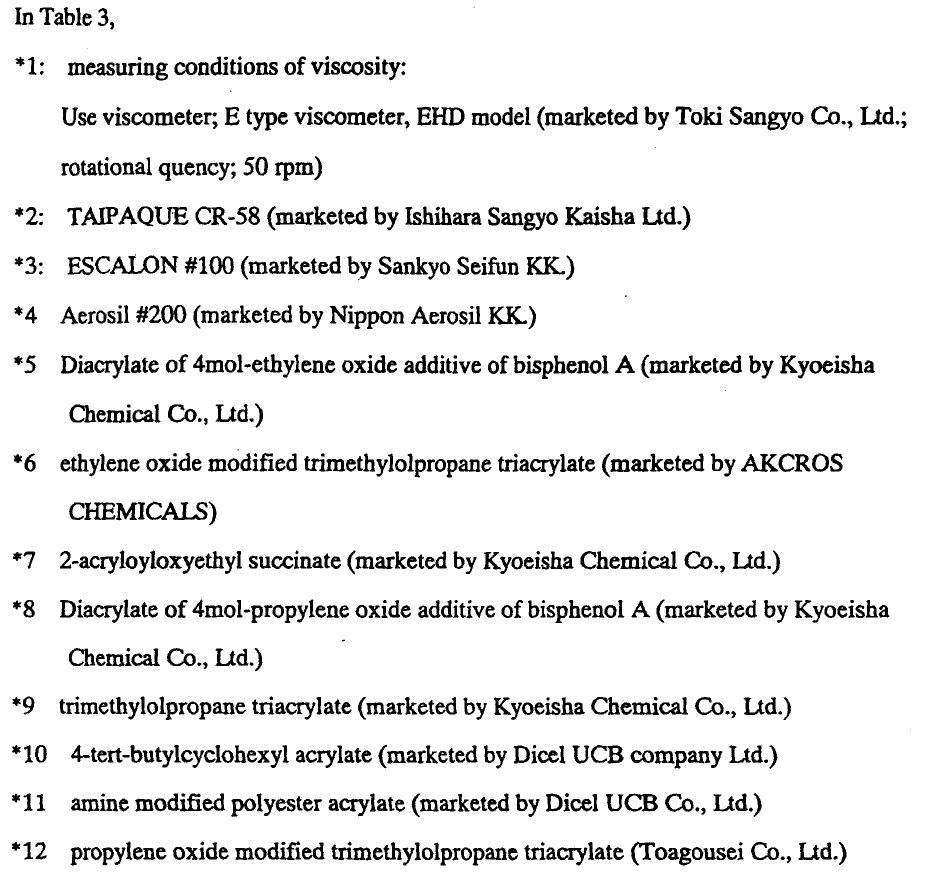

### Photocurability Test

Spacers having a thickness of 390 µm were prepared by superposing and attaching 3 paper tapes in a size of 150 mm (length) × 13 mm (width) × 130 µm (thickness) to both ends of an aluminum plate in a size of 150 mm (length) × 75 mm (width) × 1 mm (thickness) in the width direction thereof. After that, the photocurable coating compositions for road markings shown in Table 3 were coated along the spacer using a bar coater #4, and coated compositions having a thickness in a range of from 300 to 400 µm were produced. Then, glass beads No. 3 (particle diameter: 150 µm) according to JIS R 3301 were dispersed on the surface of each coated material to have a coverage of 170 g/m². Each paint composition for road markings was photocured using an ultraviolet curing system machine (Model UVC-5033, marketed by Ushio Inc.) under conditions such that the input electric power was 120 W/cm, the light source was a metal halide lamp UVL-6000M2-N1, the irradiation distance was 25 cm, the conveyer speed was 7 m/min, and the number of irradiation was in a range of from 1 to 4. The expose energy measured by a radiometer (marketed by Ushio Inc.; trade name: UIT-102; detector: UVD-365PD) was 0.32 J/cm² when the number of irradiation was 1. When the number of irradiation was 2, the expose energy was 0.64 J/cm². When the number of irradiation was 3, the expose energy was 0.96 J/cm², and when the number of irradiation was 4, the expose energy was 1.28 J/cm². The curing conditions of the surface and the back side surface of coating film obtained by peeling from the aluminum plate were evaluated in accordance with JIS K-5400 (universal coating composition test, 6.5 Drying Periods). The results obtained are shown in Table 4.

### Spray Coating Test

The photocurable coating composition for road markings shown in Table 3 were coated on the surface of asphalt of a parking lot using a hand marker for a cold paint super HM-6 (trade name; marketed by Atomix Co., Ltd.) under conditions such that the coating width was 15 cm, the coating speed was 30 m/min, and the discharge amount of the coating composition was 0.9 L/min. The results obtained are shown in Table 4.

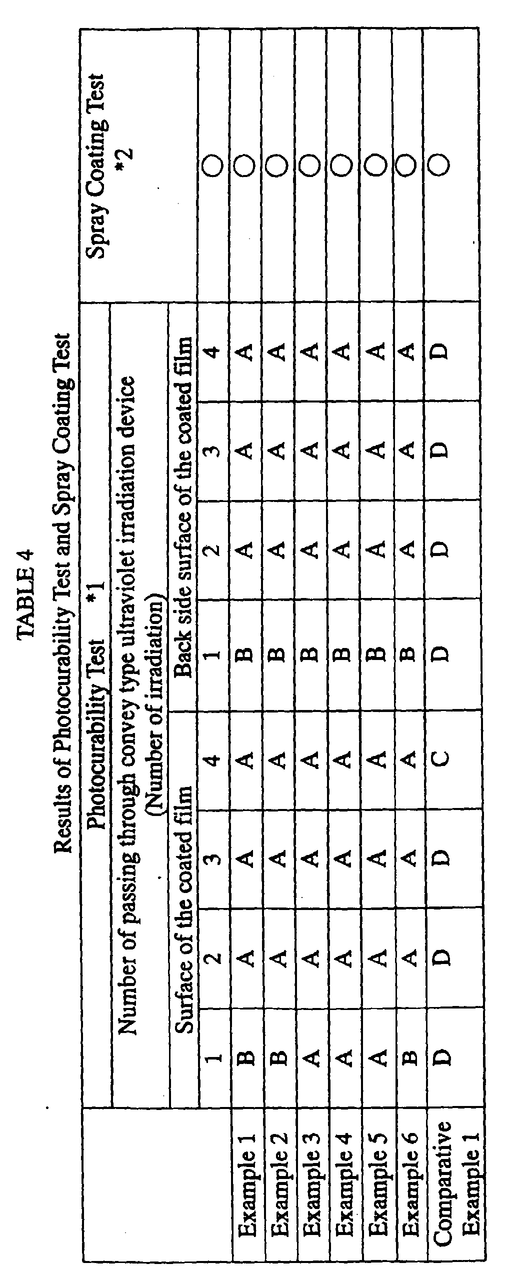

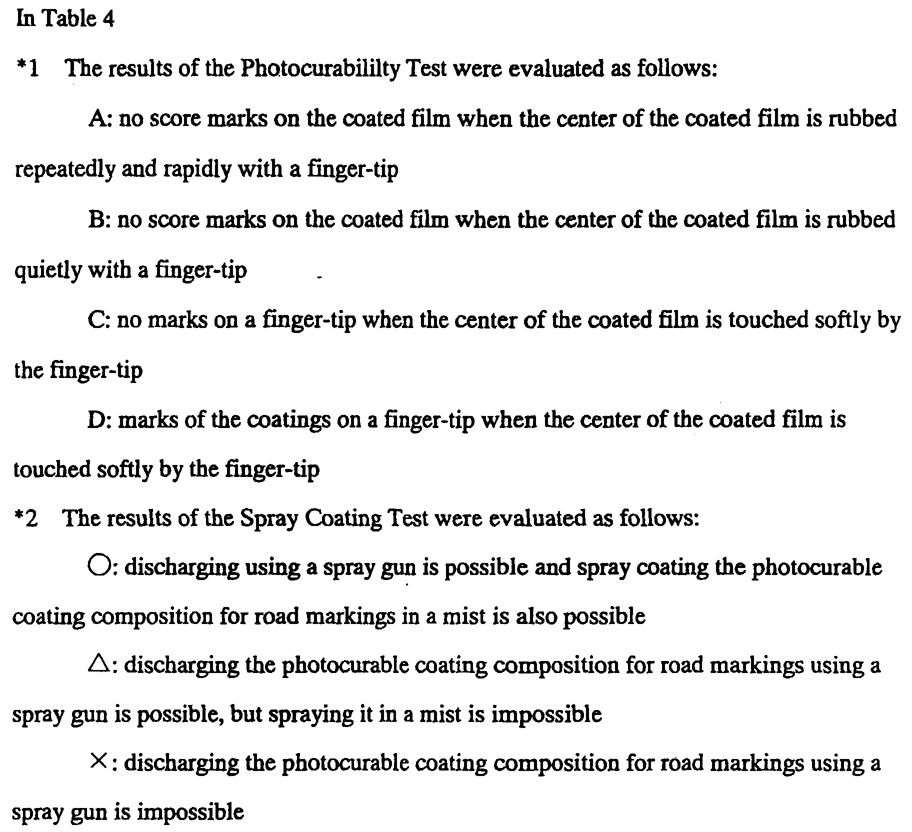

### Capabilities of Coated Film Test

The coating composition for road markings of Example 3 was coated using a 10-mil (0.25 mm) applicator (except for the tire adhesion test). Glass beads No. 3 (particle diameter: 150 µm) according to JIS R 3301 were further dispersed on the surface of each coated material to have a coverage of 170 g/m². Then the coating composition was photocured under conditions of the photocurability test in which the number of irradiation was 4. The capabilities of the obtained coated film were evaluated (Example 7).

Moreover, in order to perform the tire adhesion test, the photocurable coating composition for road markings of Example 3 was coated using a 10- mil applicator, and photocured under the conditions of the photocurability test in which the number of irradiation was 1. The substrate coated with the coating composition for road markings was the substrate specified in respective tests of JIS K 5665.

For Comparative Examples, a Class 1 coating material for road markings (ordinary temperature type) under the trade name of HARD-LINE C-1200 WHITE (marketed by Atomix Co., Ltd., Comparative Example 3) or a Class 3 coating material (melting type) under the trade name of ATOM-LINE #15 WHITE (marketed by Atomix Co., Ltd.; Comparative Example 4) was used.

The test was performed according to JIS K 5665 except for durability. The durability was tested using ABSTER Unit No. 2 manufactured by Atomix Co., Ltd. by imposing a load of 30 kg on a tire (SUPERBAN 356 RADIAL TIRE 135/95R10, trade name, marketed by Yokohama Rubber Co., Ltd.) and spreading quarts sand No. 6(5 kg) for accelerating abrasion. The results of the test on capabilities of the coated film are shown in Table 5.

**TABLE 5**

| Results of Capabilities of Coated Film Test | | | | |
|---|---|---|---|---|
| Tested Items | Measurement Results | | | |
| | Example 7 | Comparative Example 3 (Class 1) | Comparative Example 4 (Class 3) | |
| Luminous reflectance | 81.4 | 84.0 | 80 | 75 or more (Class 3) |
| Contrast ratio | 0.99 | 0.98 | - | 0.97 or more |
| Bleeding | 79.5 | 83.2 | - | on asphalt felt: 70 or more |
| | 0.99 | 0.98 | - | luminous reflectance ratio: 0.90 or more |
| Tire adhesion | 0.2 mm coating, 1 pass acceptance | acceptance | acceptance | within 15 minutes (Class 1) within 3 minutes (Class 3) |
| Abrasion resistance | 80 | 188 | 104 | 500 mg or less (Class 1) |
| Water resistance | acceptance | acceptance | acceptance | dipping for 24 hours |
| Alkali resistance | acceptance | acceptance | acceptance | dipping in calcium hydroxide for 18 hours |
| Glass bead fixing ratio (%) | 100 | 100 | - | 90% or more |
| Durability (after execution of 9 hours) | 0.8 | 2.1 | 3.5 | 10 g or less (*company test) |

As shown in the above Table 5, the photocurable coating composition for road markings of the present invention can be photocured in a short time, and has a low viscosity suitable for spraying. Furthermore, the coated film was accepted with respect to all items of JIS standard and moreover, revealed to be by far superior in the abrasion resistance and the durability to the ordinary type (Comparative Example 3) and the melting type (Comparative Example 4).

## Claims

1. A photocurable coating composition for road markings, comprising:
(A) 100 parts by weight of a compound having an ethylenically unsaturated group, of which the boiling temperature is 120°C or greater at normal pressure;
(B) 0.1 to 15 parts by weight of a photopolymerization initiator;
(C) 3 to 50 parts by weight of a color pigment; and
(D) 30 to 200 parts by weights of an extender pigment.

2. A photocurable coating composition for road markings as claimed in claim 1, the viscosity of the composition at 25°C is in a range of from 50 to 4000 mP·s.

3. A photocurable coating composition for road markings as claimed in claim 1, the viscosity of the compound having an ethylenically unsaturated group at 25°C is in a range of from 30 to 500 mP·s.

4. A photocurable coating composition for road markings as claimed in claim 1, the compound having an ethylenically unsaturated group contains a di(meth)acrylate of alkylene oxide additive of bisphenol compound in a range of from 20 to 80 weight %.

5. A photocurable coating composition for road markings as claimed in claim 1, the compound having an ethylenically unsaturated group contains a (meth)acrylate having an alicyclic group in a range of from 5 to 40 weight %.

6. A photocurable coating composition for road markings as claimed in claim 1, the compound having an ethylenically unsaturated group contains a N-vinyl amide compound in a range of from 3 to 30 weight %.

7. A photocurable coating composition for road markings as claimed in claim 6, the N-vinyl amide compound is at least one compound selected from the group consisting of N-vinyl formamide, N-vinyl acetamide, N-vinyl-N-methyl acetamide, N-vinyl pyrrolidone, and N-vinyl caprolactam.

8. A photocurable coating composition for road markings as claimed in claim 1, the photopolymerization initiator is at least one photopolymerization initiator selected from the group consisting of compounds comprising the cationic dye represented by formula (1) and the quaternary organic borate-type compound represented by formula (2), and compounds represented by formulas (3) and (4).
D⁺ · A₁⁻ (1)
(wherein D⁺ represents a cation having an absorption maximum wavelength in the wavelength region of from 400 to 1,200 nm, and A₁⁻ represents an optional anion) 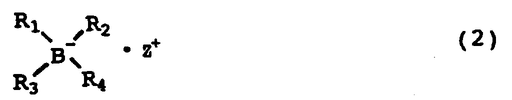 (wherein R₁, R₂, R₃ and R₄ each independently represents an alkyl group, an aryl group, an aralkyl group, an alkenyl group, an alkynyl group, a silyl group, a heterocyclic group or a halogen atom, which may have a substituent, and Z⁺ represents an optional cation) 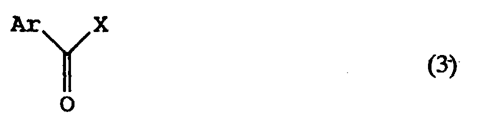 (wherein Ar represents an aryl group which may have a substituent, X represents an alkyl group, an alicyclic group, a benzyl group, an alkoxycarbonyl group, a benzoyl group, an aryl group, which may have a substituent or a phosphinoyl group having a substituent,); 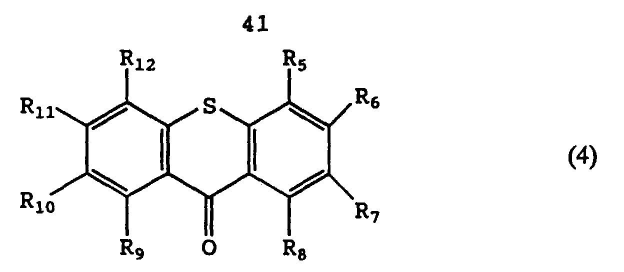 (wherein R₅, R₆, R₇, R₈, R₉, R₁₀, R₁₁ and R₁₂ each independently represents a hydrogen atom, an alkyl group having 1 to 8 carbon atoms, an alkoxy group having 1 to 8 carbon or halogen atom.

9. A photocurable coating composition for road markings as claimed in claim 1, wherein the expose energy needed for curing is in a range of from 0.05 to 1.5 J/cm².

10. A curing method of a photocurable coating composition for road markings comprising the steps of;
coating and photocuring a photocurable coating composition for road markings comprising (A) 100 parts by weight of a compound having an ethylenically unsaturated group, of which the boiling temperature is 120°C or greater at normal pressure; (B) 0.1 to 15 parts by weight of a photopolymerization initiator; (C) 3 to 50 parts by weight of a color pigment; and (D) 30 to 200 parts by weights of extender pigment.

11. A curing method of a photocurable coating composition for road markings as claimed in claim 10, wherein the expose energy needed for curing is in a range of from 0.05 to 1.5 J/cm².

12. A curing method of a photocurable coating composition for road markings as claimed in claim 10, wherein the coating is carried out by spraying.
